# EUROPÄISCHE PATENTANMELDUNG

(11) **EP 1 762 931 A1**
(43) Veröffentlichungstag der Anmeldung: **14.03.2007**
(21) Anmeldenummer: 06118043.6
(22) Anmeldetag: 28.07.2006
(51) Int. Cl.: G06F 9/445, G06F 9/44

(54) **System zur Bereitstellung von Anwendungen**

(30) Priorität: 12.09.2005 DE 102005043162
(71) Anmelder: ROBERT BOSCH GMBH, 70442 Stuttgart (DE)
(72) Erfinder: Boer, Gerrit De, 31139, Hildesheim (DE); Mann Pelz, Rodolfo, 30175, Hannover (DE); May, Thomas, 38302, Wolfenbuettel (DE); Walossek, Erik, 06114, Halle (DE); Engel, Peter, 31139, Hildesheim (DE)

(57) **Zusammenfassung**

Das erfindungsgemäße System (2) ist zur Bereitstellung von Anwendungen ausgebildet und weist eine zentrale Instanz auf, die dazu ausgebildet ist, auf mindestens einen Speicherbereich (10) zuzugreifen, so dass einer Diensteplattform (4) Anwendungen aus dem mindestens einen Speicherbereich (10) bereitstellbar sind.

## Beschreibung

Die Erfindung betrifft ein System zur Bereitstellung von Anwendungen, ein Verfahren zur Bereitstellung von Anwendungen für eine Diensteplattform, ein Computerprogramm und ein Computerprogrammprodukt.

### Stand der Technik

Der Standard "Open Service Gateway Initiative" (OSGi) spezifiziert eine Diensteplattform, auf der dynamisch zu einer Laufzeit dieser Diensteplattform verschiedene Dienste oder Anwendungen in Form von speziellen Paketen (Bundles) übertragen, installiert und gestartet werden können. Mit entsprechenden Containerklassen ist ebenfalls ein Ausführen von so genannten Xlets oder Midlets auf der Diensteplattform möglich. Werden die Anwendungen auf der Diensteplattform nicht mehr benötigt, können sie gestoppt und wieder deinstalliert werden. Dabei werden die bei der Installation in einem Arbeitsverzeichnis (Storage Area) der Diensteplattform gespeicherten Anwendungen wieder gelöscht. Dies geschieht beispielsweise auch bei einem Zurücksetzen (Reset). Eine Speicherung von Anwendungen außerhalb der Diensteplattform ist nicht vorgesehen.

Eine Übertragung der Anwendungen auf eine als mobile Telematikplattform ausgebildete Diensteplattform erfolgt im wesentlichen über eine drahtlose Datenverbindung, wie beispielsweise GSM oder UMTS, die eine hinreichende Verfügbarkeit im mobilen Einsatz gewährleistet. Ein derartiges Funknetz kann durch kostengünstigere und breitbandigere Übertragungsverfahren wie beispielsweise WLAN oder Bluetooth, in Form von AccessPoints, beispielsweise an Tankstellen oder Parkplätzen, ergänzt werden. Sind keine derartigen lokalen Access Points vorhanden, hat ein Nutzer der Diensteplattform lediglich eine Wahl zwischen einer zeit- oder volumenbasierenden Tarifierung. Benötigt der Nutzer weiterhin einen schnellen Zugriff oder sogar eine permanente Datenverbindung, um stets aktuelle Informationen beziehen zu können, kommen für ihn nur noch die paketbasierenden Übertragungsdienste GPRS oder UMTS, die bei einem größeren zu übertragenden Datenvolumen erhebliche Übertragungskosten verursachen, in Frage. Abhängig von einer Nutzerzahl der verwendeten Technik und einer Empfangsqualität können auch hier bei größeren Datenmengen erhebliche Wartezeiten entstehen.

Ausgehend hiervon wird ein System mit den Merkmalen des Patentanspruchs 1, ein Verfahren mit den Merkmalen des Patentanspruchs 8, ein Computerprogramm mit den Merkmalen des Patentanspruchs 11 und ein Computerprogrammprodukt mit den Merkmalen des Patentanspruchs 12 vorgestellt.

### Vorteile der Erfindung

Das erfmdungsgemäße System zur Bereitstellung von Anwendungen weist eine zentrale Instanz auf, die dazu ausgebildet ist, auf mindestens einen Speicherbereich zuzugreifen, so dass einer Diensteplattform Anwendungen aus dem mindestens einen Speicherbereich bereitstellbar sind.

Bei dem erfindungsgemäßen Verfahren zur Bereitstellung von Anwendungen wird von einer zentralen Instanz auf mindestens einen Speicherbereich zugegriffen, so dass einer Diensteplattform Anwendungen bereitgestellt werden können.

Bevorzugte Ausführungsformen ergeben sich aus den Ansprüchen 2 bis 7 sowie 9 und 10.

Auch die Diensteplattform mit dem mindestens einen Speicherbereich und einem Anwendungsmanager kann neben der zentralen Instanz, die hier des weiteren als ein Archivmanager bezeichnet wird, als Komponente des Systems ausgebildet sein. Dass die zentrale Instanz bzw. der Archivmanager auf den mindestens einen Speicherbereich zugreift, bedeutet, dass die zentrale Instanz dort Anwendungen und/oder Versionen von Anwendungen abspeichert, bei Bedarf wieder einliest und somit derartige Anwendungen für einen Nutzer verwaltet. Es ist vorgesehen, dass Anwendungen, die der Diensteplattform bereitgestellt werden, auf der Diensteplattform installiert und in der Regel gleich gestartet oder ausgeführt werden. Die zentrale Instanz ist üblicherweise auch als Teil der Diensteplattform ausgebildet.

Der mindestens eine Speicherbereich der Diensteplattform, der auch als Archiv des Systems bezeichnet wird, ist vorzugsweise als dauerhafter bzw. persistenter Speicherbereich ausgebildet. Der Archivmanager erlaubt ein Archivieren bzw. Laden von Anwendungen und/oder Diensten, die als Bundle vorliegen, auf unterschiedliche Speicherbereiche, wie interne oder externe Medien, beispielsweise USB-Sticks, Flash-Speicherkarten, mobile Geräte, CDs usw. Weiterhin ermöglicht der Archivmanager einen Austausch von Anwendungen zwischen verschiedenen Diensteplattformen, insbesondere über Speichermedien oder über Kurzstreckenfunk wie Bluetooth oder WLAN.

Das erfmdungsgemäße System und das erfindungsgemäße Verfahren sind derart ausgebildet, dass auf Anwendungen insbesondere auf zwei verschiedene beschriebene Arten zugegriffen werden kann.

Bei einem sog. automatischen Zugriff wird einem Nutzer der Diensteplattform eine interessante neue Anwendung angeboten. Diese kann der Nutzer mit Hilfe des Anwendungsmanagers zur Verwaltung von Anwendungen von einem Anbieter beispielsweise drahtlos herunterladen. Bevor der Anwendungsmanager einen Ladevorgang startet, wird durch den Archivmanager unter Zugriff auf den mindestens einen Speicherbereich überprüft, ob in dem mindestens einen Speicherbereich eine alte Anwendung, die der neuen Anwendung entspricht und durch die die neue Anwendung evtl. ersetzbar ist, gespeichert ist. Wird eine identische Version der Anwendung gefunden, so wird diese der Diensteplattform statt der durch den Anbieter angebotenen neuen Version bereitgestellt. Ist in dem mindestens einen Speicherbereich eine ältere Version der Anwendung vorhanden, so kann auch diese ggf. dem Nutzer zur Bereitstellung auf der Diensteplattform angeboten werden. Wenn in dem mindestens einen Speicherbereich keine geeignete Version der neuen Anwendung gefunden wurde oder falls der Nutzer die Bereitstellung einer alternativen Anwendung ablehnt, so ist vorgesehen, dass die neue Anwendung von dem Anbieter heruntergeladen, der Diensteplattform bereitgestellt und durch den Archivmanager zusätzlich in dem in dem mindestens einen Speicherbereich abgelegt wird.

Hierdurch ist es möglich, eine redundante Übertragung von Anwendungen zu verhindern und somit eine drahtlose Datenübertragung über GPRS, GSM oder UMTS auf ein Minimum zu reduzieren und wertvolle Übertragungszeit und Übertragungskosten einzusparen.

Alternativ oder ergänzend zu dem automatischen Zugriff ist auch ein gezielter Zugriff auf Anwendungen möglich. Falls der Nutzer auf ältere von dem Anbieter nicht mehr angebotene Anwendung zurückgreifen oder Anwendungen zwischen verschiedenen Diensteplattformen über extern abgelegte Speicherbereiche austauschen möchte, kann er den Archivmanager über den Anwendungsmanager auch direkt ansprechen. Bei einem derartigen Zugriff auf Anwendungen wird der Nutzer ggf. aufgefordert, einen entsprechenden Datenträger als der mindestens eine Speicherbereich in das System einzulegen. Die Diensteplattform kann in diesem Fall auch durch eine übertragene Signatur sicherstellen, dass nur Anwendungen auf der Diensteplattform installiert werden können, die auf einem Portal eines Herstellers der Anwendungen angeboten werden oder wurden. Mit dieser Ausgestaltung ist es möglich, mit dem Archivmanager Anwendungen auf externen Speichermedien zu archivieren.

Das vorliegende System kann als mobile Telematikplattform, beispielsweise für ein Kraftfahrzeug, ausgebildet sein. Das Verfahren eignet sich insbesondere für Einrichtungen, die nach der "Open Service Gateway Initiative" (OSGi) standardisiert sind.

Zur eindeutigen Identifizierung der Anwendungen und Applikationen besitzen sämtliche von einem Anbieter oder Serviceprovider ladbaren Anwendungen und/oder deren verschiedene Versionsstände, die in Form von OSGi Bundles, Xlets oder Midlets vorliegen, besondere eindeutige Komponentenidentifikationen (Komponenten-Ids), durch die die Anwendungen zu identifizieren und/oder zu verwalten sind.

Zusätzlich zur Ablage der Anwendungen in dem mindestens einen Speicherbereich können auch zugeordnete Konfigurationsdaten der archivierten Anwendungen mit abgelegt werden. Dies betrifft evtl. auch notwendige Lizenzdaten. Ist z.B. ein zur Aktivierung einer Anwendung bei der Registrierung übermittelter Code erforderlich, so kann dieser ebenfalls archiviert oder auf einem Server des Anbieters abgelegt und bei Reaktivierung der Anwendung wieder angefordert werden. Zur Realisierung eines Kopierschutzes für kostenpflichtige Anwendungen wird jede Diensteplattform und ggf. jeder Speicherbereich mit einer eindeutigen Kennung versehen, die die Anwendungen abfragen können. Da ein Zugangscode nur für eine bestimmte Plattformkennung gültig ist, kann somit eine Ausführung einer für eine andere Diensteplattform registrierten Anwendung unterbunden werden.

Das System und insbesondere der Anwendungs- und/oder Archivmanager können bei Durchführung des Verfahrens Listen mit Informationen, beispielsweise Komponentenidentifikationen oder Konfigurationsdaten, über die Anwendungen verwalten. Derartige Listen können dem Nutzer und/oder System seitens des Anbieters, wenn dieser Anwendungen zum Herunterladen anbietet, bereitgestellt werden. Des weiteren kann das System derartige Listen über ältere Anwendungen, die in dem mindestens einen Speicherbereich abgelegt sind, aufweisen. Somit ist eine Archivierung der bereits vorhandenen Anwendungen auf einfache Weise möglich.

Durch Verwendung von Anwendungen, die in dem mindestens einen Speicherbereich archiviert sind und somit als lokal vorhandene Kopien vorliegen, ergeben sich erheblich Kosten- und Geschwindigkeitsvorteile, da ein erneutes Herunterladen von Anwendungen nicht erforderlich ist. Teuere und z.T. recht langsame Funkübertragungstechniken wie GPRS, GSM und UMTS können umgangen werden. Das vorliegende System bietet sich demnach besonders für Nutzer an, die mit vielen verschiedenen und auch größeren Anwendungen arbeiten und diese einfach installieren und auch deinstallieren können, ohne diese Anwendungen löschen zu müssen.

Ein Herunterladen von Anwendungen auf Vorrat an breitbandigen lokalen Zugangspunkten (Access Points) ist ebenso möglich, da die Anwendungen in archivierter Form nur den mindestens einen Speicherbereich, beispielsweise einen Festplattenspeicher, belegen und somit die Systemperformance der Diensteplattform nicht beeinflussen.

Auch im Falle eines notwendigen Zurücksetzens (Resets) der Diensteplattform ist es möglich, einen zuvor vorhandenen Bestand an Anwendungen wieder herzustellen.

Weiterhin besitzt der Nutzer die Möglichkeit, seine zeitweise nicht benutzten Anwendungen selbständig zu archivieren, um somit von einem zukünftigen Angebot und einer Verfügbarkeit von Anbietern unabhängig zu sein. Eine Archivierung beispielsweise über Listen auf den Speicherbereichen, die beispielsweise als mobile Datenträger ausgebildet sind, erlaubt es zusätzlich, Daten zwischen verschiedenen Endgeräten auf einfache Weise auszutauschen.

Das erfindungsgemäße Computerprogramm mit Programmcodemitteln ist dazu ausgebildet, alle Schritte des erfindungsgemäßen Verfahrens durchzuführen, wenn das Computerprogramm auf einem Computer oder einer entsprechenden Recheneinheit, insbesondere in dem erfindungsgemäßen System, ausgeführt wird.

Das erfindungsgemäße Computerprogrammprodukt mit Programmcodemitteln, die auf einem computerlesbaren Datenträger gespeichert sind, ist dazu ausgebildet, alle Schritte des erfindungsgemäßen Verfahrens durchzuführen, wenn das Computerprogramm auf einem Computer oder einer entsprechenden Recheneinheit, insbesondere in dem erfindungsgemäßen System, ausgeführt wird.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im folgenden unter Bezugnahme auf die Zeichnung ausführlich beschrieben.

Figur 1 zeigt eine bevorzugte Ausführungsform des erfindungsgemäßen Systems in schematischer Darstellung.

Figur 2 zeigt in schematischer Darstellung verschiedene bevorzugte Ausführungsformen zur Durchführung des erfindungsgemäßen Verfahrens.

Die Figuren werden zusammenhängend und übergreifend beschrieben. Gleiche Bezugszeichen bezeichnen gleiche Komponenten.

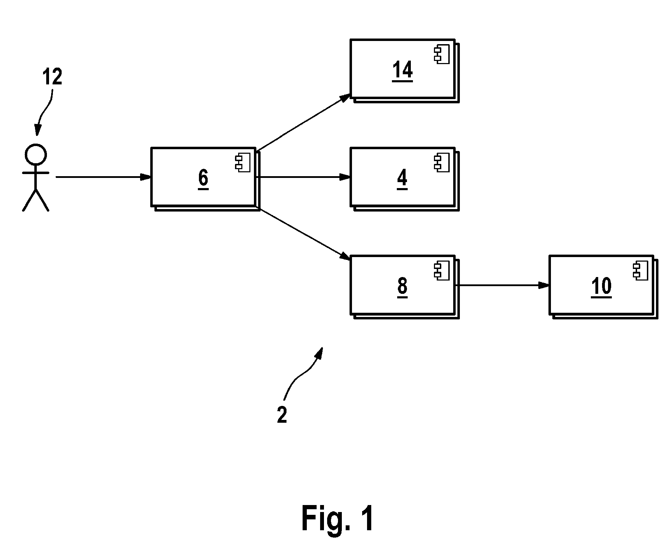

Figur 1 zeigte ein schematisches Komponentendiagramm einer bevorzugter Ausführungsform des Systems 2, das als zentrale Instanz einen Archivmanager 8, eine Diensteplattform 4, einen Anwendungsmanager 6 sowie einen Speicherbereich 10 als Archiv des Systems 2 aufweist. Des weiteren sind in Figur 1 ein Nutzer 12 des Systems 2 sowie ein Anbieter 14 schematisch dargestellt.

Bei Betrieb des Systems 2 ist vorgesehen, dass auf der Diensteplattform 4 Anwendungen ausgeführt werden, die durch den Anbieter 14 zur Nutzung zur Verfügung gestellt werden. Bietet der Anbieter 14 neue Anwendungen bzw. neue Versionen von Anwendungen an, so werden diese dem Anwendungsmanager 6 zum Herunterladen angeboten. Der Anwendungsmanager 6 fragt die als Archivmanager 8 ausgebildete zentrale Instanz, ob die angebotenen neuen Anwendungen auf dem Speicherbereich 10 vorhanden sind und/oder ob ältere Versionen von Anwendungen abgespeichert sind, die den neu angebotenen Anwendungen zumindest gleichwertig oder ebenbürtig sind. Anwendungen, die in dem Speicherbereich nicht oder zumindest nicht in alternativen Versionen vorhanden sind, werden über den Anwendungsmanager 6 von dem Anbieter 14 heruntergeladen, falls ein derartiges Herunterladen dem Nutzer 12 sinnvoll oder erforderlich erscheint. Zugleich werden die neu heruntergeladenen Anwendungen der Diensteplattform 4 bereitgestellt, in diesem Fall auf der Diensteplattform 4 installiert und in der Regel im Anschluss gestartet.

Ältere Anwendungen, die bei einer derartigen Installation von der Diensteplattform 4 deinstalliert werden, gehen in dem System 2 nicht verloren, da sämtliche im Laufe eines Betriebs des Systems 2 zur Verfügung gestellte Anwendungen in dem Speicherbereich 10 abgelegt werden. Falls der Nutzer 12 den Wunsch hat, eine ältere Anwendung auf der Diensteplattform 4 zu installieren und zu starten, so kann diese durch den Archivmanager 8 bereitgestellt werden.

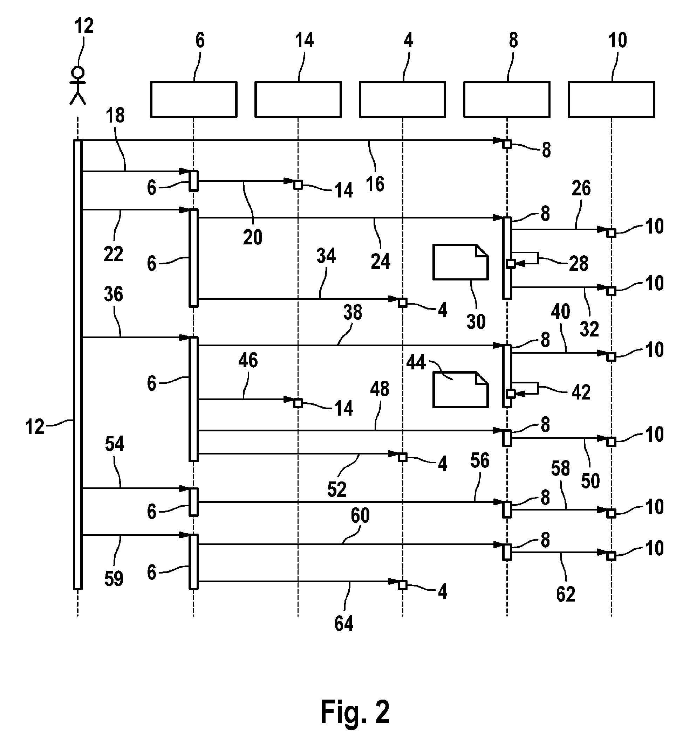

Figur 2 zeigt in schematischer Darstellung ein Sequenzdiagramm zu unterschiedlichen bevorzugten Ausführungsformen des Verfahrens. Einzelne Schritte des Verfahrens sind durch Pfeile verdeutlicht.

Zu Beginn des Verfahrens ist dem Nutzer 12 eine Auswahl des mindestens einen zum Speichern von Anwendungen zu verwendenden Speicherbereichs 10 über den Archivmanager 8 möglich (Pfeil 16). Der Nutzer 12 kann über den Anwendungsmanager 6 eine Liste mit Informationen zu den Anwendungen und/oder deren Versionen anfordern (Pfeil 18). Diese Liste holt der Anwendungsmanager 6 von dem Anbieter 14 (Pfeil 20).

Falls sich der Nutzer 12 gemäß einer ersten Ausführungsform des Verfahrens für eine neue, erste Anwendung A interessiert, teilt er sein Interesse dem Anwendungsmanager 6 mit (Pfeil 22). Dann wird zunächst überprüft, ob diese erste Anwendung A bereits in dem Speicherbereich 10 gespeichert ist. Hierzu stellt der Anwendungsmanager 6 an den Archivmanager 8 eine entsprechende Anfrage (Pfeil 24). Der Archivmanager 8 greift auf den Speicherbereich 10 zu und prüft, ob die Anwendung A bereits gespeichert ist (Pfeil 26). In dem Speicherbereich 10 sucht der Archivmanager 8 nach der ersten Anwendung A (Pfeil 28). Ist die Suche 30 erfolgreich, wird diese Anwendung durch den Anwendungsmanager 8 geladen (Pfeil 32). Anschließend stellt der Anwendungsmanager 6 der Diensteplattform 4 die Anwendung A bereit, so dass diese auf der Diensteplattform 4 installiert und gestartet wird (Pfeil 34). Es ist somit nicht nötig, diese erste Anwendung A von dem Anbieter 14 herunterzuladen.

Bei einer zweiten Ausführungsform des Verfahrens wird durch den Nutzer 12 über den Anwendungsmanager 6 eine zweite Anwendung B angefordert (Pfeil 36). Der Anwendungsmanager 6 stellt an den Archivmanager 8 eine Anfrage zu der zweiten Anwendung B (Pfeil 38). Auch in diesem Fall greift der Archivmanager 8 auf den Speicherbereich 10 zu und prüft, ob die zweite Anwendung B gespeichert ist (Pfeil 40). Der mindestens eine Speicherbereich 10 wird durchsucht (Pfeil 42). In diesem Fall ist eine Suche 44 erfolglos. Da die zweite Anwendung B nicht in dem Speicherbereich 10 vorliegt, lädt der Anwendungsmanager 6 diese von dem Anbieter 14 herunter (Pfeil 46). Diese zweite Anwendung B wird dem Archivmanager 8 von dem Anwendungsmanager 6 zur Verfügung gestellt (Pfeil 48) und von dem Archivmanager 8 durch Zugriff auf den Speicherbereich 10 gespeichert und archiviert (Pfeil 50). Zudem wird diese zweite Anwendung B der Diensteplattform 4 durch den Anwendungsmanager 6 bereitgestellt und somit auf der Diensteplattform 4 installiert und gestartet (Pfeil 52).

In weiterer Ausgestaltung des Verfahrens kann der Nutzer 12 auf lokal archivierte Anwendungen oder deren Versionen zurückgreifen. Hierzu wird bei dem Anwendungsmanager 6 eine entsprechende Liste mit Informationen zu bereits vorhandenen Anwendungen und/oder deren Versionen angefordert (Pfeil 54). Der Anwendungsmanager 6 richtet an den Archivmanager 8 eine entsprechende Anfrage (Pfeil 56), der daraufhin den Speicherbereich 10 nach einer angeforderten älteren Anwendung C untersucht (Pfeil 58). Der Nutzer fordert die Anwendung C an (Pfeil 59). Der Anwendungsmanager 6 greift auf den Archivmanager 8 zu und fordert die Anwendung C an (Pfeil 60). Der Archivmanager 8 lädt die Anwendung C aus dem Speicherbereich 10 (Pfeil 62). Die archivierte Anwendung C wird auf der Diensteplattform 4 durch den Anwendungsmanager 6 installiert und gestartet (Pfeil 64).

## Patentansprüche

1. System zur Bereitstellung von Anwendungen, das eine zentrale Instanz aufweist, die dazu ausgebildet ist, auf mindestens einen Speicherbereich (10) zuzugreifen, so dass einer Diensteplattform (4) Anwendungen aus dem mindestens einen Speicherbereich (10) bereitstellbar sind.

2. System nach Anspruch 1, bei dem die zentrale Instanz als Archivmanager (8) ausgebildet ist.

3. System nach Anspruch 1 oder 2, für das vorgesehen ist, dass ein Anbieter (14) eine neue Anwendung anbietet, und bei dem ein Anwendungsmanager (6) auf die zentrale Instanz zugreift und die zentrale Instanz überprüft, ob in dem mindestens einen Speicherbereich (10) eine alte Anwendung, mit der die neuen Anwendung ersetzbar ist, vorhanden ist, wobei der Diensteplattform (4) diese alte Anwendung bereitstellbar ist, falls die neue Anwendung durch diese alte Anwendung ersetzbar ist, und wobei die neue Anwendung durch den Anwendungsmanager (6) von dem Anbieter (14) herunterzuladen, in dem mindestens einen Speicherbereich (10) abzuspeichern und der Diensteplattform (4) bereitzustellen ist, falls die neue Anwendung nicht durch eine in dem mindestens einen Speicherbereich (10) vorhandene Anwendung ersetzbar ist.

4. System nach einem der voranstehenden Ansprüche, für das vorgesehen ist, dass eine Anfrage nach einer älteren Anwendung auf dem mindestens einen Speicherbereich (10) erfolgt und diese ältere Anwendung der Diensteplattform (4) bereitstellbar ist.

5. System nach einem der voranstehenden Ansprüche, das dazu ausgebildet ist, unterschiedliche Versionen von Anwendungen, die durch Komponentenidentifikationen identifizierbar sind, zu archivieren.

6. System nach einem der voranstehenden Ansprüche, bei dem die zentrale Instanz dazu ausgebildet ist, Anwendungen zwischen Diensteplattformen (4) auszutauschen.

7. System nach einem der voranstehenden Ansprüche, das als mobile Telematikplattform ausgebildet ist.

8. Verfahren zur Bereitstellung von Anwendungen für eine Diensteplattform (4), bei dem von einer zentralen Instanz auf mindestens einem Speicherbereich (10) zugegriffen wird, so dass der Diensteplattform (4) Anwendungen aus dem mindestens einen Speicherbereich (10) bereitgestellt werden.

9. Verfahren nach Anspruch 8, bei dem eine neue Anwendung durch einen Anbieter (14) angeboten wird und bei dem durch einen Anwendungsmanager (6) auf die zentrale Instanz zugegriffen wird und durch die zentrale Instanz überprüft wird, ob in dem mindestens einen Speicherbereich (10) eine alte Anwendung, durch die die neue Anwendung ersetzbar ist, vorhanden ist, wobei der Diensteplattform (4) die alte Anwendung bereitgestellt wird, falls die neue Anwendung durch die alte Anwendung ersetzbar ist, und wobei die neue Anwendung durch den Anwendungsmanager (6) von dem Anbieter (14) heruntergeladen, in dem mindestens einen Speicherbereich (10) gespeichert und der Diensteplattform (4) bereitgestellt wird, falls die neue Anwendung durch eine Anwendung aus dem mindestens einen Speicherbereich (10) nicht ersetzbar ist.

10. Verfahren nach einem der Ansprüche 8 oder 9, bei dem eine Anfrage nach einer älteren Anwendung auf dem mindestens einen Speicherbereichs (10) durchgeführt wird und die ältere Anwendung der Diensteplattform (4) bereitgestellt wird.

11. Computerprogramm mit Programmcodemitteln, um alle Schritte eines Verfahrens nach einem der Ansprüche 8 bis 10 durchzuführen, wenn das Computerprogramm auf einem Computer oder einer entsprechenden Recheneinheit, insbesondere in einem System (2) nach einem der Ansprüche 1 bis 7, ausgeführt wird.

12. Computerprogrammprodukt mit Programmcodemitteln, die auf einem computerlesbaren Datenträger gespeichert sind, um alle Schritte eines Verfahrens nach einem der Ansprüche 8 bis 10 durchzuführen, wenn das Computerprogramm auf einem Computer oder einer entsprechenden Recheneinheit, insbesondere in einem System (2) nach einem der Ansprüche 1 bis 7, ausgeführt wird.
